# EUROPEAN PATENT APPLICATION

(11) **EP 4 478 464 A1**
(43) Date of publication of application: **18.12.2024**
(21) Application number: 23770931.6
(22) Date of filing: 17.03.2023
(51) Int. Cl.: H01M 8/1213, C25B 9/60, C25B 9/70, C25D 17/00, H01M 8/04, H01M 8/12, H01M 8/2475

(54) **ELECTROCHEMICAL CELL, ELECTROCHEMICAL CELL DEVICE, MODULE, AND MODULE ACCOMMODATION DEVICE**

(30) Priority: 18.03.2022 JP 2022044678
(71) Applicant: Kyocera Corporation, Kyoto-shi, Kyoto 612-8501 (JP)
(72) Inventor: SENO, Hiroaki, Kyoto-shi, Kyoto 612-8501 (JP)
(74) Representative: Viering, Jentschura & Partner mbB Patent- und Rechtsanwälte
(86) International application number: PCT/JP2023/010764
(87) International publication number: WO 2023/176979

(57) **Abstract**

An electrochemical cell includes an element portion, a metal body, and an oxide coating material. The metal body contains chromium and is electrically connected to the element portion. The oxide coating material covers a surface of the metal body and is exposed to an oxidizing atmosphere. The oxide coating material is reducible the release of chromium into the oxidizing atmosphere. The oxide coating material includes at least a first coating material that is electrically conductive.

## Description

### TECHNICAL FIELD

The present disclosure relates to an electrochemical cell, an electrochemical cell device, a module, and a module housing device.

### BACKGROUND OF INVENTION

In recent years, various fuel cell stack devices each including a plurality of fuel cells have been proposed as next-generation energy. A fuel cell is a type of electrochemical cell that can obtain electrical power by using a fuel gas such as a hydrogen-containing gas and an oxygen-containing gas such as air.

### CITATION LIST

### PATENT LITERATURE

Patent Document 1: JP 2015-162357 A

### SUMMARY

An electrochemical cell according to an aspect of an embodiment includes an element portion, a metal body, and an oxide coating material. The metal body contains chromium and is electrically connected to the element portion. The oxide coating material covers the metal body and is exposed to an oxidizing atmosphere. The oxide coating material is reducible the release of chromium into the oxidizing atmosphere. The oxide coating material includes at least a first coating material that is electrically conductive.

An electrochemical cell device of the present disclosure includes a cell stack including the electrochemical cell described above.

A module of the present disclosure includes the electrochemical cell device described above and a container storing the electrochemical cell device.

A module housing device of the present disclosure includes the module described above, an auxiliary device operating the module, and an external case housing the module and the auxiliary device.

### BRIEF DESCRIPTION OF THE DRAWINGS

FIG. 1A is a cross-sectional view illustrating an example of an electrochemical cell according to a first embodiment.
FIG. 1B is a side view of an example of the electrochemical cell according to the first embodiment when viewed from the side of an air electrode.
FIG. 2A is a perspective view illustrating an example of a cell stack device according to the first embodiment.
FIG. 2B is a cross-sectional view taken along a line X-X illustrated in FIG. 2A.
FIG. 2C is a top view illustrating the example of the cell stack device according to the first embodiment.
FIG. 3 is an external appearance perspective view illustrating an example of a module according to the first embodiment.
FIG. 4 is an exploded perspective view schematically illustrating an example of a module housing device according to the first embodiment.
FIG. 5 is a cross-sectional view illustrating an example of an electrochemical cell according to a second embodiment.
FIG. 6 is a cross-sectional view illustrating an example of an electrochemical cell according to a third embodiment.
FIG. 7 is a cross-sectional view illustrating an example of an electrochemical cell according to a fourth embodiment.
FIG. 8 is a cross-sectional view illustrating an example of an electrochemical cell according to a fifth embodiment.
FIG. 9 is a cross-sectional view illustrating an example of an electrochemical cell according to a sixth embodiment.

### DESCRIPTION OF EMBODIMENTS

The above-described fuel cell stack device has room for improvement in terms of improving power generation performance.

In this regard, it is expected to provide an electrochemical cell, an electrochemical cell device, a module, and a module housing device that can improve performance.

Embodiments of an electrochemical cell, an electrochemical cell device, a module, and a module housing device disclosed in the present application is described below in detail with reference to the accompanying drawings. Note that the invention is not limited by the following embodiments.

Note that the drawings are schematic and that the dimensional relationships between elements, the proportions of the elements, and the like may differ from the actual ones. There may be differences between the drawings in terms of dimensional relationships, proportions, and the like.

### First Embodiment

### Configuration of Cell

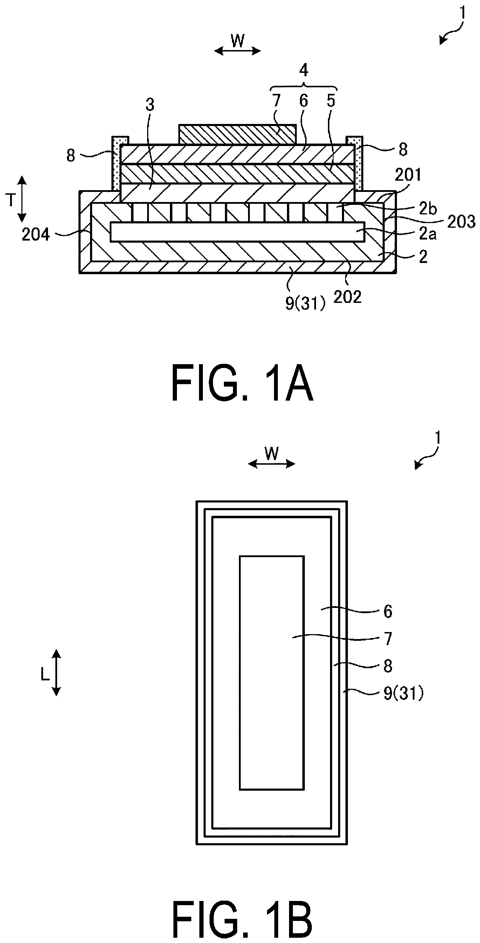

First, with reference to FIGs. 1A and 1B, an example of a solid oxide fuel cell is described as an electrochemical cell according to a first embodiment. An electrochemical cell device may include a cell stack including a plurality of electrochemical cells. The electrochemical cell device including the plurality of electrochemical cells is simply referred to as a cell stack device.

FIG. 1A is a cross-sectional view illustrating an example of the electrochemical cell according to the first embodiment. FIG. 1B is a side view of an example of the electrochemical cell according to the first embodiment when viewed from the side of an air electrode. Note that FIGs. 1A and 1B illustrate an enlarged portion of each configuration of the cell 1. Hereinafter, the electrochemical cell may be simply referred to as a cell.

As illustrated in FIG. 1A, a cell 1 includes a metal body 2, an element portion 4, and a sealing material 8. The element portion 4 includes a fuel electrode 5, a solid electrolyte layer 6, and an air electrode 7.

The metal body 2 has a first surface 201 and a second surface 202 facing each other in a thickness direction T, and a third surface 203 and a fourth surface 204 connecting the first surface 201 and the second surface 202.

The metal body 2 has a gas-flow passage 2a and an opening 2b. The gas-flow passage 2a is a space that is located between the first surface 201 and the second surface 202 and extends in the length direction L. The opening 2b is a through-hole having a first end opened to the first surface 201 and a second end communicating with the gas-flow passage 2a. A fuel gas flowing through the gas-flow passage 2a is supplied to a fuel electrode 5 of the element portion 4 through the opening 2b. The diameter of the opening 2b may be, for example, from 0.1 mm to 0.5 mm, in particular, from 0.3 mm to 0.4 mm. An aperture ratio in a region where the opening 2b is formed may be, for example, 10% or more.

The metal body 2 is a member made of metal containing chromium. The metal body 2 has electrical conductivity. The metal body 2 may be, for example, stainless steel such as ferritic stainless steel or austenitic stainless steel having high heat resistance. The metal body 2 may be made of, for example, a nickel-chromium alloy or an iron-chromium alloy. The metal body 2 may contain, for example, a metal oxide. The metal body 2 may have a structure in which a plurality of plate materials such as a plate material having the first surface 201 and a plate material having the second surface 202 are layered and end portions thereof are welded.

The element portion 4 is located on the first surface 201 side of the metal body 2. The element portion 4 is located to face the first surface 201. Such an element portion 4 is fixed to the metal body 2 via an adhesive 3 and supported by the metal body 2.

The element portion 4 includes the fuel electrode 5, the solid electrolyte layer 6, and the air electrode 7. As the material of the fuel electrode 5, a commonly known material can be used. The fuel electrode 5 may use porous electrically conductive ceramics, for example, ceramics containing ZrO₂ in which a calcium oxide, a magnesium oxide, or a rare earth element oxide is in solid solution, and Ni and/or NiO. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is in solid solution may be referred to as stabilized zirconia. The stabilized zirconia may include partially stabilized zirconia. The fuel electrode 5 contains metal particles. An electrode containing the metal particles may be referred to as a first electrode.

The solid electrolyte layer 6 is an electrolyte and delivers ions between the fuel electrode 5 and the air electrode 7. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which from 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 7 has gas permeability. The open porosity of the air electrode 7 may be, for example, in a range from 20% to 50%, in particular, in a range from 30% to 50%. The open porosity of the air electrode 7 may also be referred to as the porosity of the air electrode 7.

The material of the air electrode 7 is not particularly limited as long as the material is one generally used for an air electrode. The material of the air electrode 7 may be, for example, an electrically conductive ceramic such as a so-called ABO₃ type perovskite oxide.

The material of the air electrode 7 may be, for example, a composite oxide in which strontium (Sr) and lanthanum (La) coexist at an A site. Examples of such a composite oxide include LaₓSr_{1 - x}Co_{y}Fe_{1 - y}O₃, LaₓSr_{1 - x}MnO₃, LaₓSr_{1 - x}FeO₃, and LaₓSr_{1 - x}CoO₃. Here, x is 0 < x < 1, and y is 0 < y < 1. The air electrode 7 may be referred to as a second electrode in contrast to the first electrode containing metal particles.

The element portion 4 may include an intermediate layer between the solid electrolyte layer 6 and the air electrode 7. When the element portion 4 includes the intermediate layer, the intermediate layer has a function as a diffusion suppression layer, for example. When strontium (Sr) contained in the air electrode 7 diffuses into the solid electrolyte layer 6, a resistance layer of SrZrO₃ is formed in the solid electrolyte layer 6. The intermediate layer makes it difficult for Sr to diffuse, thereby making it difficult for SrZrO₃ to be formed.

The material of the intermediate layer is not particularly limited as long as the material generally makes it difficult for an element to diffuse between the air electrode 7 and the solid electrolyte layer 6. The material of the intermediate layer may contain, for example, cerium oxide (CeO₂) in which rare earth elements other than cerium (Ce) are in solid solution. As such rare earth elements, for example, gadolinium (Gd), samarium (Sm), or the like may be used.

The sealing material 8 is located on an end surface of the fuel electrode 5. The sealing material 8 has gas blocking properties, is located to cover the periphery of the fuel electrode 5, and seals the flow of the fuel gas between the fuel electrode 5 and the outside. The sealing material 8 may have a porosity of, for example, 5% or less. When the sealing material 8 has a porosity of 5% or less, the fuel gas does not easily flow between the fuel electrode 5 and the outside. The porosity of the sealing material 8 may be, for example, an average value of the porosities of at least three arbitrary cross sections of the sealing material 8. As illustrated in FIGs. 1A and 1B, the sealing material 8 may be located on the end surfaces of the fuel electrode 5 and the solid electrolyte layer 6.

The sealing material 8 has electrical insulating properties. Hereinafter, the electrical insulating properties may be simply referred to as insulating properties. Examples of the sealing material 8 that can be used include an oxide having low electrical conductivity such as glass. Here, "having insulating properties or low electrical conductivity" means that the conductivity is 1/10 or less of that of the solid electrolyte layer 6. The electrical conductivity of the sealing material 8 may be, for example, 0.2 S/m or less, in particular, 0.002 S/m or less, at room temperature (25°C). The material of the sealing material 8 may be, for example, amorphous glass or the like, or crystallized glass. As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

The cell 1 may further include the adhesive 3 located between the metal body 2 and the element portion 4. The adhesive 3 is located between the first surface 201 of the metal body 2 and the fuel electrode 5, and bonds the metal body 2 and the element portion 4. The adhesive 3 has electrical conductivity, for example. The adhesive 3 may have gas permeability, for example. In the cell 1, a coating film containing, for example, chromic oxide (Cr₂O₃) may be further located between the first surface 201 of the metal body 2 and the adhesive 3.

The adhesive 3 may contain, for example, conductive particles such as Ni, and inorganic oxides such as TiO₂, rare earth element oxides (Y₂O₃, CeO₂, or the like), and transition metal oxides (Fe₂O₃, CuO, or the like). Note that the adhesive 3 may be located to be in contact with the first surface 201 where the opening 2b is not located. The fuel electrode 5 may be fixed to the metal body 2 without the intervention of the adhesive 3.

Portions of the first surface 201 to the fourth surface 204 located on the surface of the metal body 2 that are not in contact with the adhesive 3 or the element portion 4 are exposed to an external space. Such an external space is a space where the air electrode 7 of the cell 1 is exposed, and is filled with oxygen-containing gas. That is, the external space is an oxidizing atmosphere.

In the cell 1 used in such an environment, during high-temperature operation, the chromium (Cr) contained in the metal body 2 is desorbed into an oxidizing atmosphere and adheres to the element portion 4, so that power generation performance may be deteriorated.

The cell 1 according to the present embodiment further includes an oxide coating film 9. The oxide coating film 9 covers the metal body 2 and is exposed to an oxidizing atmosphere. Since the oxide coating film 9 is reducible the release of chromium from the metal body 2 to the oxidizing atmosphere, the power generation performance of the cell 1 is improved. Since the chromium is hardly released from the metal body 2 to the oxidizing atmosphere by the oxide coating film 9, the oxidation resistance and durability of the metal body 2 are improved. The oxide coating film 9 may make it difficult to increase a coating film containing chromic oxide (Cr₂O₃) located on the surface of the metal body 2.

The oxide coating film 9 may have, for example, a first coating film 31 that is electrically conductive. The first coating film 31 is an example of a first coating material. The first coating film 31 may have an electrical conductivity of 0. 005 S/cm or more. The first coating film 31 may include a transition metal oxide, for example, manganese (Mn). The first coating film 31 may include, for example, a composite oxide containing Mn. The composite oxide containing Mn may have a spinel structure. The first coating film 31 may contain, for example, CoMn₂O₄, MnCo₂O₄, Mn_{1.5}Co_{1.5}O₄, ZnMnCoO₄, or the like. In such a spinel-type composite oxide containing Mn, Co, and/or Zn, the composition ratio of Mn to Co and/or Zn can be arbitrarily selected. Thus, since the internal resistance of the element portion 4 is reduced compared to when the first coating film 31 is not provided, the power generation performance of the cell 1 is improved. The first coating film 31 may further contain, for example, a trace amount of Cr₂O₃, Al₂O₃, ZrO₂, or the like. The composite oxide containing Mn may contain, for example, Al, Zr, or the like.

Such a cell 1 is obtained as follows. For example, a layered body obtained by layering and firing a molded sheet of the fuel electrode 5 and a molded sheet of the solid electrolyte layer 6, and the metal body 2 having the first coating film 31 (or a molded film of the first coating film 31) are prepared. The surface of the fuel electrode 5 of the layered body is bonded to the first surface 201 having the opening 2b of the metal body 2 via the adhesive 3. Subsequently, an intermediate layer and the air electrode 7 are formed on the solid electrolyte layer 6, and the sealing material 8 is further provided on the lateral surface of the element portion 4, thereby obtaining the cell 1. The sealing material 8 may be located only on the lateral surface of the fuel electrode 5 in the element portion 4. The sealing material 8 may be located on at least a part of the lateral surface of the solid electrolyte layer 6, and further on at least a part of the surface of the solid electrolyte layer 6. The sealing material 8 may be located on the adhesive 3 or may be located on at least a part of the first coating film 31. The first coating film 31 may not be disposed on the first surface 201 having the opening 2b of the metal body 2.

The layered body of the fuel electrode 5 and the solid electrolyte layer 6 may be produced, for example, as follows. A mixture of a Ni or NiO powder, a stabilized zirconia powder, an organic solvent, and a binder is sheet-molded to obtain a sheet-molded body of the fuel electrode 5. A mixture of a stabilized zirconia powder, an organic solvent, and a binder is sheet-molded on the sheet-molded body of the fuel electrode 5 to obtain a layered molded body. The obtained layered molded body is fired to obtain the layered body of the fuel electrode 5 and the solid electrolyte layer 6.

The first coating film 31 may be formed as follows. For example, a paste obtained by mixing a powder of a composite oxide containing Mn, a solvent, and a binder is applied to a surface of the metal body 2 having no opening 2b and dried to form a molded film of first coating film 31. Further, a composite in which the surface of the fuel electrode 5 of the layered body is bonded to a surface of the metal body 2 having the opening 2b by using the adhesive 3 is fired at, for example, 900°C to 1200°C to obtain a bonded body of the metal body 2 having the first coating film 31 and the layered body. Further, a molded body of an intermediate layer is formed on the surface of the solid electrolyte layer 6 of the bonded body, and is fired at, for example, 1000°C to 1200°C to form the intermediate layer. Further, a molded body of the air electrode 7 is formed on the intermediate layer, and fired at, for example, 1000°C to 1200°C to form the air electrode 7, thereby obtaining the cell 1.

The fuel electrode 5, the solid electrolyte layer 6, the intermediate layer, and the air electrode 7 may be sequentially formed directly on the first surface 201 having the opening 2b of the metal body 2 having the first coating film 31 or the molded film of the first coating film 31. For example, a layered sheet to be the element portion 4 may be produced in advance, may be bonded onto the first surface 201 having the opening 2b of the metal body 2, and then fired.

The sealing material 8 can be formed by, for example, applying the paste of the glass powder described above to a predetermined portion, drying the paste, and then performing heat treatment at, for example, 800°C to 900°C.

### Configuration of Cell Stack Device

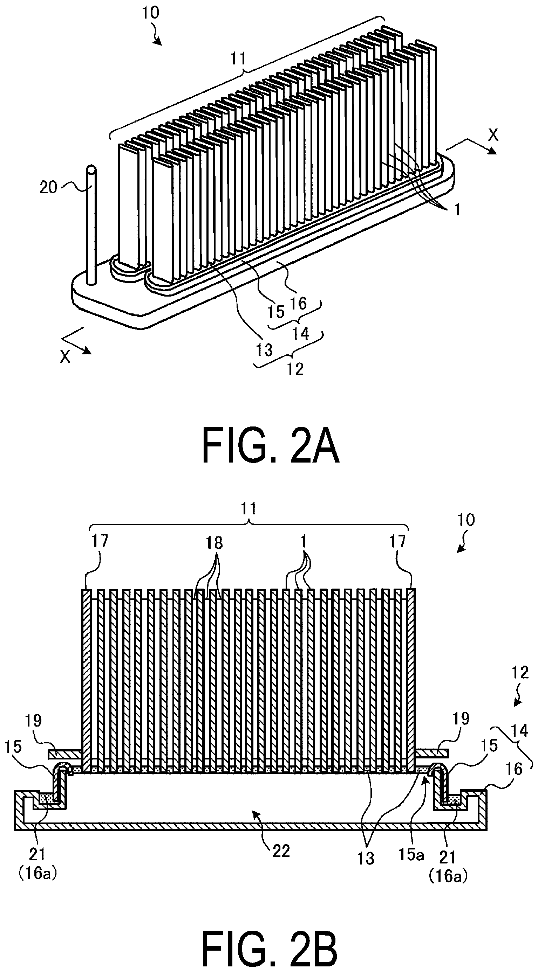

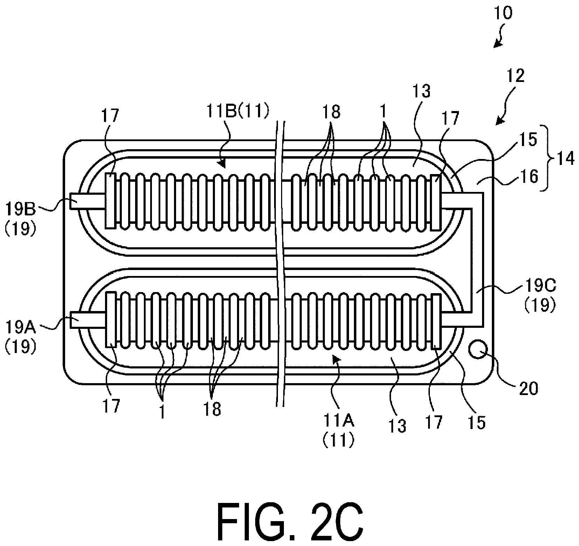

A cell stack device according to the present embodiment using the cell 1 described above is described below with reference to FIGs. 2A to 2C. FIG. 2A is a perspective view illustrating an example of a cell stack device according to the first embodiment, FIG. 2B is a cross-sectional view taken along a line X-X illustrated in FIG. 2A, and FIG. 2C is a top view illustrating an example of the cell stack device according to the first embodiment.

As illustrated in FIG. 2A, a cell stack device 10 includes a cell stack 11 including a plurality of cells 1 arrayed (layered) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, constituting the support member 14, are made of metal and electrically conductive.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding material 21 with which the recessed groove 16a of the gas tank 16 is filled.

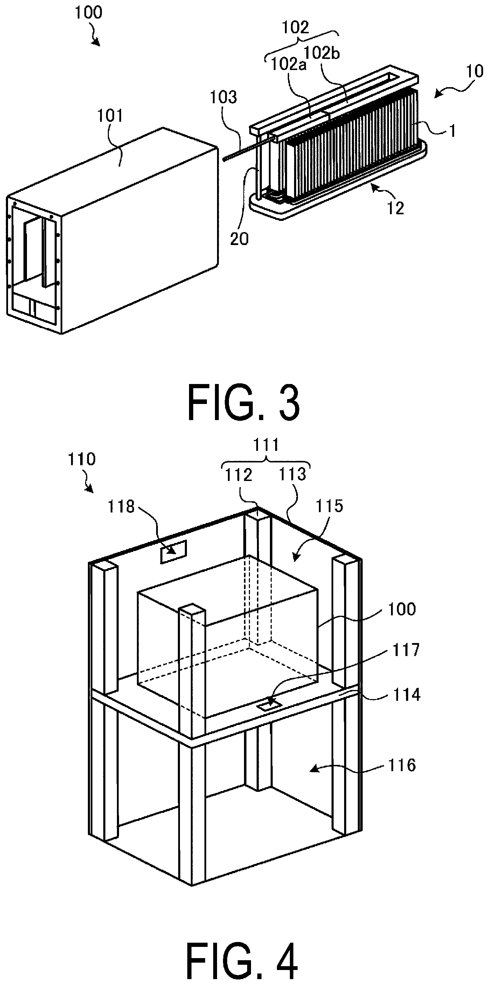

In the example illustrated in FIG. 2A, the fuel gas is stored in an internal space 22 formed by the support body 15 and the gas tank 16 constituting the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas supplied to the gas tank 16 is generated by a reformer 102 (see FIG. 3) to be described below.

A hydrogen-rich fuel gas can be produced, for example, by steam-reforming a raw fuel. When the fuel gas is produced by steam reforming, the fuel gas contains steam.

In the example illustrated in FIG. 2A, two rows of the cell stacks 11, two of the support bodies 15, and the gas tank 16 are provided. The two rows of the cell stacks 11 each have the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15.

The insertion hole 15a has, for example, an oval shape in a top surface view. The length of the insertion hole 15a in an arrangement direction of the cells 1, that is, the thickness direction T, is longer than the distance between two end current collection members 17 located at two ends of the cell stack 11, for example. The width of the insertion hole 15a is, for example, greater than the length of the cell 1 in the width direction W (see FIG. 1A).

As illustrated in FIG. 2B, a bonding portion between the inner wall of the insertion hole 15a and the lower end portion of each of the cells 1 is filled with the fixing material 13 and solidified. Thus, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion thereof, with the internal space 22 of the support member 14.

The fixing material 13 and the bonding material 21 may be of low electrical conductivity, such as glass. As the specific materials of the fixing material 13 and the bonding material 21, amorphous glass or the like may be used, and in particular, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series one of the adjacent ones of the cells 1 to another one of the adjacent ones of the cells 1. More specifically, the electrically conductive member 18 connects the fuel electrode 5 of one of cells 1 with the air electrode 7 of another one of the cells 1.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, the cell stack device 10 may be one battery in which two cell stacks 11A and 11B are connected in series. In this case, the electrically conductive portion 19 of the cell stack device 10 may include a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Module

A module according to an embodiment of the present disclosure using the cell stack device 10 described above is described below with reference to FIG. 3. FIG. 3 is an exterior appearance perspective view illustrating a module according to the first embodiment. FIG. 3 illustrates a state in which the front and rear surfaces, which are part of a container 101, are removed and the cell stack device 10 of the fuel cell housed therein is taken out rearward.

As illustrated in FIG. 3, the module 100 includes the container 101, and the cell stack device 10 stored in the container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

The fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

As described above, such a module 100 is configured to house the cell stack device 10 having the cell 1, whose power generation performance is improved, so that the power generation performance of the module 100 can be improved.

### Module Housing Device

FIG. 4 is an exploded perspective view illustrating an example of a module housing device according to the first embodiment. A module housing device 110 according to the present embodiment includes an external case 111, the module 100 illustrated in FIG. 3, and an auxiliary device (not illustrated). The auxiliary device operates the module 100. The module 100 and the auxiliary device are housed in the external case 111. Note that in FIG. 4, the configuration is partially omitted.

The external case 111 of the module housing device 110 illustrated in FIG. 4 includes a support 112 and an external plate 113. A dividing plate 114 vertically partitions the interior of the external case 111. The space above the dividing plate 114 in the external case 111 is a module housing chamber 115 for housing the module 100. The space below the dividing plate 114 in the external case 111 is an auxiliary device housing chamber 116 for housing the auxiliary device configured to operate the module 100. Note that in FIG. 4, the auxiliary device housed in the auxiliary device housing chamber 116 is omitted.

The dividing plate 114 includes an air circulation hole 117 for causing air in the auxiliary device housing chamber 116 to flow into the module housing chamber 115 side. The external plate 113 constituting the module housing chamber 115 includes an exhaust hole 118 for discharging air inside the module housing chamber 115.

As described above, such a module housing device 110 is configured such that the module 100 with improved power generation performance is provided in the module housing chamber 115, so that the power generation performance of the module housing device 110 can be improved.

### Second Embodiment

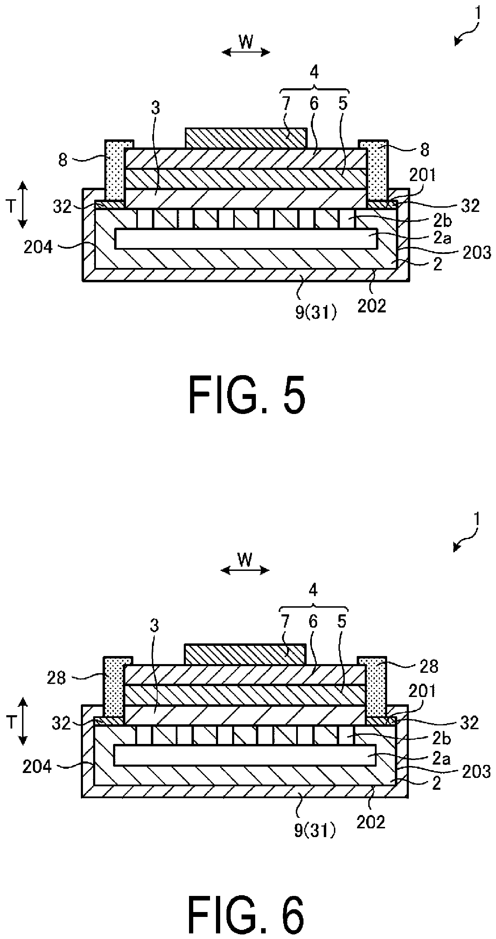

FIG. 5 is a cross-sectional view illustrating an example of an electrochemical cell according to a second embodiment. A cell 1 according to the present embodiment is different from the cell 1 according to the first embodiment in that the first coating film 31 is located away from the adhesive 3. Since the first coating film 31 and the adhesive 3 are located away from each other, so-called back diffusion in which ions such as O²⁻ move between the first coating film 31 and the adhesive 3 is less likely to occur, so that the power generation performance of the cell 1 is improved.

The cell 1 according to the present embodiment is obtained as follows. For example, the surface of the fuel electrode 5 of the layered body described in the first embodiment is bonded to the first surface 201 having the opening 2b of the metal body 2 via the adhesive 3. At this time, the layered body is disposed so that the first coating film 31 formed on the metal body 2 and the fuel electrode 5 of the layered body are separated from each other. Subsequently, the intermediate layer and the air electrode 7 are formed on the solid electrolyte layer 6, and the sealing material 8 is further provided on the lateral surface of the element portion 4, so that the cell 1 according to the present embodiment is obtained.

The sealing material 8 may be located in a gap between the first coating film 31 and the adhesive 3. Thus, for example, since the release of chromium from the first surface 201 of the metal body 2 exposed to an oxidizing atmosphere is reducible, durability of the metal body 2 can be enhanced. Such a sealing material 8 is an example of a second coating material located between the metal body 2 and the element portion 4.

A second coating film 32 may be located between the metal body 2 and the sealing material 8. The second coating film 32 may include, for example, Cr₂O₃. The second coating film 32 is neither the first coating material nor the second coating material.

### Third Embodiment

FIG. 6 is a cross-sectional view illustrating an example of an electrochemical cell according to a third embodiment. A cell 1 according to the present embodiment is different from the cell 1 illustrated in FIG. 5 in that a sealing material 28 is provided instead of the sealing material 8. The sealing material 28 has gas blocking properties. The sealing material 28 may have a porosity of 5% or less, for example. When the sealing material 28 has a porosity of 5% or less, the fuel gas does not easily flow between the fuel electrode 5 and the outside. The porosity of the sealing material 28 may be, for example, an average value of the porosities of at least three arbitrary cross-sections of the sealing material 28.

The cell 1 according to the present embodiment is obtained as follows. For example, the surface of the fuel electrode 5 of the layered body described in the first embodiment is bonded to the first surface 201 having the opening 2b of the metal body 2 via the adhesive 3. At this time, the layered body is disposed so that the first coating film 31 formed on the metal body 2 and the fuel electrode 5 of the layered body are separated from each other. Subsequently, the intermediate layer is formed on the solid electrolyte layer 6, and the sealing material 28 is further provided on the lateral surface of the layered body. After the sealing material 28 is provided, the air electrode 7 is formed on the intermediate layer to obtain the cell 1 according to the present embodiment. The intermediate layer may be formed by a vapor phase method such as vacuum deposition.

The sealing material 28 may contain, for example, an insulating oxide having higher heat resistance than the sealing material 8, such as forsterite. Thus, the sealing material 28 is reducible the release of chromium from the first surface 201 of the metal body 2 not only during the operation of the cell 1 but also during the manufacturing of the cell 1, for example, so that the power generation performance of the cell 1 can be further enhanced. Compared with the sealing material 8, the sealing material 28 is less likely to be dissolved in high-temperature water vapor, less likely to evaporate components, and thus less likely to cause gas leakage and a decrease in electrode performance. In particular, the forsterite has a thermal expansion coefficient close to that of the metal/alloy as the material of the metal body 2 and/or the element portion 4, and can enhance the thermal shock resistance of the cell 1. The forsterite has lower ion conductivity of O²⁻ or the like than glass or the like used for the sealing material 8 even in high-temperature water vapor, and is less likely to cause back diffusion. The forsterite has an electrical resistivity of 1 × 10¹² Ω·m or more at room temperature (25°C), for example.

### Fourth Embodiment

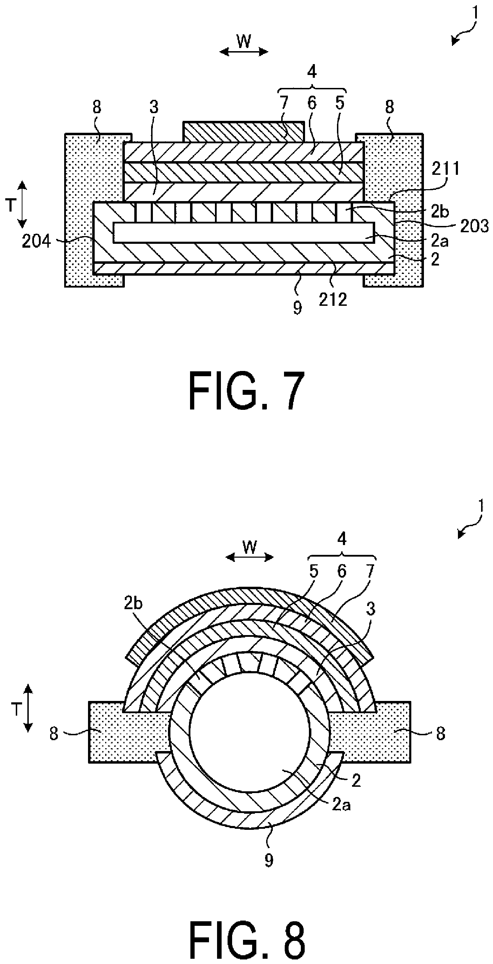

FIG. 7 is a cross-sectional view illustrating an example of an electrochemical cell according to a fourth embodiment. A cell 1 according to the present embodiment is different from the cell 1 illustrated in FIG. 1A in that the sealing material 8 is located to wrap around the third surface 203 and the fourth surface 204 from a first surface 211 of the metal body 2 to a second surface 212 on which the oxide coating film 9 is located. The metal body 2 is covered with the oxide coating film 9 exposed to the oxidizing atmosphere and the sealing material 8, and the metal body 2 itself is not exposed to the oxidizing atmosphere. Thus, the chromium (Cr) contained in the metal body 2 is less likely to be released into the oxidizing atmosphere during high-temperature operation. Consequently, the present embodiment can improve the power generation performance of the cell 1. The oxide coating film 9 according to the present embodiment is, for example, the first coating film 31. The cell 1 may have, for example, the second coating film 32 between the oxide coating film 9 and the metal body 2.

### Fifth and Sixth Embodiments

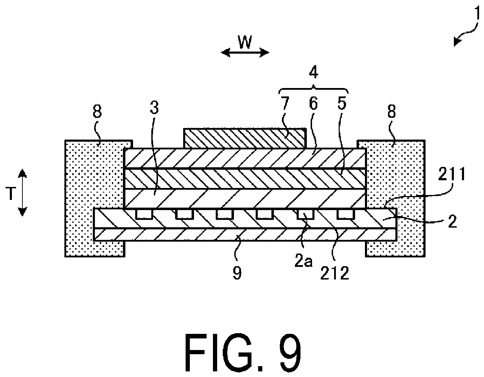

FIG. 8 is a cross-sectional view illustrating an example of an electrochemical cell according to a fifth embodiment. FIG. 9 is a cross-sectional view illustrating an example of an electrochemical cell according to a sixth embodiment.

As illustrated in FIG. 8, a cell 1 may include a metal body 2 having a substantially cylindrical shape. As illustrated in FIG. 9, a cell 1 may include a metal body 2 having a flat plate shape. The metal body 2 having a flat plate shape includes a gas-flow passage 2a located between a first surface 211 and a second surface 212 facing each other in the thickness direction T and extending in the length direction L (see FIG. 1B). In this way, regardless of the shape of the metal body 2, the power generation performance of the cell 1 can be improved by covering the portion exposed to the oxidizing atmosphere with the oxide coating film 9 and the sealing material 8. The oxide coating film 9 according to the present embodiment is, for example, the first coating film 31. The cell 1 may have, for example, the second coating film 32 between the oxide coating film 9 and the metal body 2.

### Other Embodiments

In the cells 1 illustrated in FIGs. 7 to 9, the sealing material 8 is provided, but the sealing material 28 may be provided instead of the sealing material 8.

In each of the embodiments described above, a fuel cell, a fuel cell stack device, a fuel cell module, and a fuel cell device have been illustrated as examples of the "electrochemical cell", the "electrochemical cell device", the "module", and the "module housing device"; however, they may be an electrolytic cell, an electrolytic cell stack device, an electrolytic module, and an electrolytic device, respectively, as other examples. The electrolytic cell includes a first electrode layer, a solid electrolyte layer, and a second electrode layer, and decomposes water vapor into hydrogen and oxygen or decomposes carbon dioxide into carbon monoxide and oxygen by supplying electric power. Although an oxide ion conductor or a hydrogen ion conductor is shown as an example of the electrolyte material of the electrochemical cell in each of the above embodiments, the electrolyte material may be a hydroxide ion conductor. According to the electrolytic cell, the electrolytic cell stack device, the electrolytic module, and the electrolytic device described above, electrolytic performance can be improved.

While the present disclosure has been described in detail, the present disclosure is not limited to the aforementioned embodiment, and various changes, improvements, and the like can be made without departing from the gist of the present disclosure.

As described above, the electrochemical cell (cell 1) according to the embodiment includes the element portion 4, the metal body 2, and the oxide coating material. The metal body 2 contains chromium and supports the element portion 4. The oxide coating material covers the surface of the metal body 2 and is exposed to an oxidizing atmosphere. The oxide coating material is reducible the release of chromium into the oxidizing atmosphere. The oxide coating material includes at least a first coating material (first coating film 31) that is electrically conductive. This can improve the performance of the cell 1.

The electrochemical cell device (cell stack device 10) according to the embodiment includes the cell stack 11 including the electrochemical cell. This can improve the performance of the cell stack device 10.

The module 100 according to the embodiment includes the electrochemical cell device described above, and the container 101 storing the electrochemical cell device. This can improve the performance of the module 100.

The module housing device 110 according to the embodiment includes the module 100 described above, the auxiliary device configured to operate the module 100, and the external case housing the module 100 and the auxiliary device. This can improve the performance of the module housing device 110.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1 Cell
2 Metal body
4 Element portion
8 Sealing material
9 Oxide coating film
10 Cell stack device
11 Cell stack
31 First coating film
32 Second coating film
100 Module
110 Module housing device

## Claims

1. An electrochemical cell, comprising:
an element portion;
a metal body containing chromium and electrically connected to the element portion; and
an oxide coating material:
covering the metal body;
being reducible in release of chromium into the oxidizing atmosphere when exposed in an oxidizing atmosphere;
and
comprising at least a first coating material that is electrically conductive.

2. The electrochemical cell according to claim 1, wherein the oxide coating material further comprises a second coating material that is electrically insulative.

3. The electrochemical cell according to claim 2, wherein the second coating material is between the element portion and the first coating material.

4. The electrochemical cell according to claim 2 or 3, wherein the element portion comprises a first electrode, a solid electrolyte layer, and a second electrode, and
an electrical conductivity of the second coating material is 1/10 or less of an electrical conductivity of the solid electrolyte layer.

5. The electrochemical cell according to any one of claims 2 to 4, wherein the second coating material has a porosity of 10% or less.

6. The electrochemical cell according to any one of claims 2 to 4, wherein the second coating material contains forsterite.

7. The electrochemical cell according to any one of claims 1 to 6, wherein the first coating material contains manganese.

8. An electrochemical cell device comprising a cell stack comprising the electrochemical cell according to any one of claims 1 to 7.

9. A module comprising:
the electrochemical cell device according to claim 8; and
a container storing the electrochemical cell device.

10. A module housing device comprising:
the module according to claim 9;
an auxiliary device configured to operate the module; and
an external case housing the module and the auxiliary device.
